# EUROPÄISCHE PATENTSCHRIFT

(11) **EP 1 539 867 B1**
(45) Veröffentlichungstag und Bekanntmachung des Hinweises auf die Patenterteilung: **20.09.2006**
(21) Anmeldenummer: 03797293.2
(22) Anmeldetag: 11.09.2003
(51) Int. Cl.: C08J 5/18, B32B 27/32, B65D 65/40

(54) **VERFAHREN ZUM HERSTELLEN EINER VERPACKUNG AUS THERMOFORMBARER FOLIE MIT HOHER WÄRMEFORMBESTÄNDIGKEIT UND WASSERDAMPFBARRIERE**
METHOD FOR THE PRODUCTION OF A PACKAGING MADE OF THERMOFORMABLE FILM HAVING HIGH THERMAL STABILITY AND WATER- VAPOUR BARRIER
PROCEDE DE REALISATION A PARTIR D'UN FILM THERMOFORMABLE D'UN EMBALLAGE PRESENTANT UNE RESISTANCE ELEVEE A LA DEFORMATION THERMIQUE ET UNE GRANDE IMPERMEABILITE A LA VAPEUR D'EAU

(30) Priorität: 13.09.2002 DE 10242730
(43) Veröffentlichungstag der Anmeldung: 15.06.2005
(73) Patentinhaber: Topas Advanced Polymers GmbH, 65926 Frankfurt am Main (DE)
(72) Erfinder: HEUKELBACH, Dirk, 64331 Weiterstadt (DE); BEER, Ekkehard, 65307 Bad Schwalbach (DE)
(74) Vertreter: Ackermann, Joachim
(86) Internationale Anmeldenummer: PCT/EP2003/010077
(87) Internationale Veröffentlichungsnummer: WO 2004/026946

(56) Entgegenhaltungen:
- EP-A- 0 384 694
- EP-A- 1 323 524
- WO-A-01/64786
- US-A1- 2002 012 781

## Beschreibung

Die Erfindung betrifft ein Verfahren zum Herstellen einer Verpackung aus einer thermoformbaren Folie aus thermoplastischen Polyolefinen durch Thermoformen, die nach dem Thermoformen eine hohe Wärmeformbeständigkeit und eine hohe Wasserdampfbarriere besitzt.

Aus der JP 2000 202951 A2 sind thermoformbare Folien bekannt mit einem Mehrschichtaufbau aus einem meist halogenhaltigen Polymer wie Polyvinylchlorid (PVC) als Trägerfolie und einer Mischung eines amorphen Cycloolefincopolymers (COC) mit einem teilkristallinen Polyolefin hoher Dichte wie hochdichtes Polyethylen (HDPE), niederdichtes Polyethylen (LDPE) oder lineares niederdichtes Polyethylen (LLDPE) als Deckschichten. Nachteilig daran ist allerdings der Halogenanteil in der Trägerfolie und die meist nicht zufriedenstellende Wärmeformbeständigkeit, die nicht ausreicht, um die thermogeformte Folie ohne Formänderung einer Sterilisation mit Hilfe von Wasserdampf zu unterziehen.

Aus der DE-A 100 09 646 ist eine Polymermischung enthaltend amorphes COC als solche bekannt und Folien oder Blisterverpackungen, die aus der Polymermischung hergestellt werden. Die Schrift beschreibt zwar, dass die beschriebene Mischung geeignet ist, um das Relaxationsverhalten, das Schrumpfverhalten oder die Wärmeformbeständigkeit zu beeinflussen, aber sie macht keine Aussage über das Wesen und das Ausmaß der erreichten Wärmeformbeständigkeit.

Aufgabe der vorliegenden Erfindung war es, ein neues Verfahren zum Herstellen von Verpackungen zu finden, bei dem eine Folie eingesetzt wird, die eine sehr gute Thermoformbarkeit besitzt. Die so durch Thermoformen hergestellte Verpackung soll eine verbesserte Wärmeformbeständigkeit besitzen, im günstigsten Fall so eine hohe Wärmeformbeständigkeit aufweisen, dass sie wasserdampfsterilisierbar ist, d.h. dass sie ihre geometrische Form bei Einwirken einer Temperatur im Bereich von bis zu 121°C über eine Zeitdauer von mindestens 20 min nicht verändert. Zusätzlich zu dieser Eigenschaft soll die Verpackung auch noch eine zuverlässig gute Barriere gegenüber dem Durchtritt von Wasserdampf bieten und unter wirtschaftlichen Bedingungen großtechnisch zu produzieren sein.

Gelöst wird diese Aufgabe durch ein Verfahren der eingangs genannten Gattung, dessen Kennzeichenmerkmal darin zu sehen ist, dass die thermoformbare Folie eine Menge im Bereich von 5 bis 100 Gew.-%, vorzugsweise von 20 bis 90 Gew.-%, besonders bevorzugt von 25 bis 80 Gew.-%, COC mit einer Glastemperatur T_{g} im Bereich von 65 bis 200 °C, gemessen nach DIN EN ISO 11357-1 mit Hilfe einer DSC bei einer Aufheizgeschwindigkeit von 10 K/min, enthält und dass die daraus durch Thermoformen bei einer Temperatur im Bereich von 70 bis 170 °C, vorzugsweise von 80 bis 160 °C, hergestellte Verpackung eine Wärmeformbeständigkeit im Bereich von 60 bis 200 °C besitzt, vorzugsweise von 80 bis 200 °C, besonders bevorzugt von 110 bis 180°C.

Das Thermoformen nach dem erfindungsgemäßen Verfahren wird zweckmäßig über eine Zeitdauer von 0, 5 bis 10 s, vorzugsweise von 1 bis 7 s, bei der entsprechenden Temperatur durchgeführt.

Die mittlere Molmasse der Cycloolefincopolymeren lässt sich bei ihrer Herstellung durch Wasserstoff-Dosierung, Variation der Katalysatorkonzentration oder Variation der Temperatur steuern. Die für das erfindungsgemäße Verfahren geeignete thermoformbare Folie enthält Cycloolefincopolymere mit einer mittleren Molmassen M_{w} im Bereich von 500 bis 2 000 000 g/mol, vorzugsweise von 1 000 bis 1 000 000 g/mol, insbesondere von 3 000 bis 500 000 g/mol. Diese mit Hilfe der Gelpermeationschromatographie (GPC) in Chloroform bei 35 °C mit Hilfe eines RI Detektors bestimmten Molmassen sind relativ und beziehen sich auf eine Eichung mit eng verteilten Polystyrolstandards.

Die beschriebenen Cycloolefincopolymere besitzen gemäß DIN 53 728 Viskositätszahlen VZ im Bereich von 5 bis 5000 ml/g, vorzugsweise von 5 bis 2000 ml/g und insbesondere von 5 bis 1000 ml/g.

Die thermoformbare Folie weist im allgemeinen eine Dicke im Bereich von 5 bis 1000 µm auf, vorzugsweise von 50 bis 600 µm, besonders bevorzugt von 100 bis 500 µm. Sie kann dabei als Monofolie vorliegen oder als Mehrschichtfolie mit zwei, drei oder noch mehr Schichten, wobei aber die Schichtdicke der COChaltigen Lage mindestens 10 % der Gesamtdicke der Mehrschichtfolie betragen sollte.

Das in der thermoformbaren Folie enthaltene COC enthält im allgemeinen 0,1 bis 100,0 Gew.-%, vorzugsweise 0,1 bis 99,9 Gew.-%, bezogen auf die Gesamtmasse des Cycloolefincopolymers, polymerisierte Einheiten, welche sich ableiten von mindestens einem polycyclischen Olefin der nachfolgenden Formeln I, II, II', III, IV, V oder VI 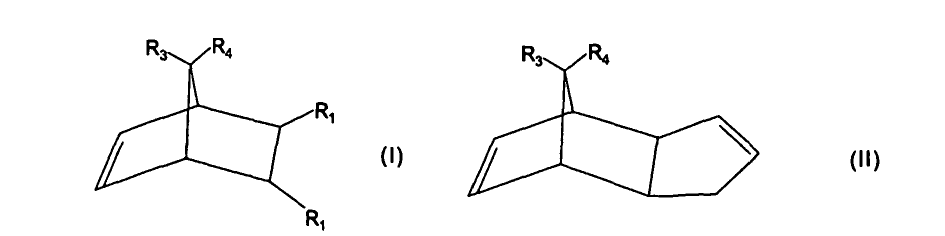 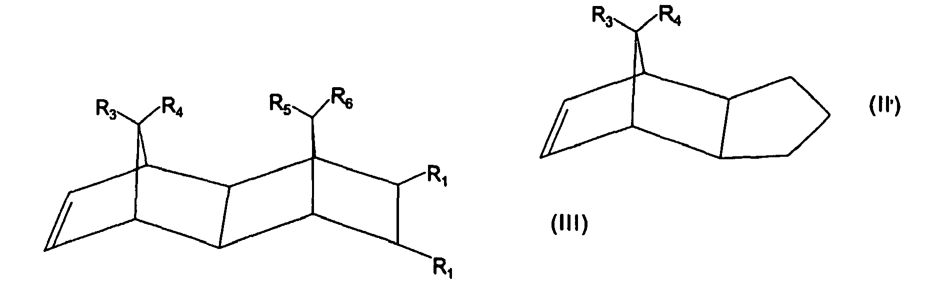 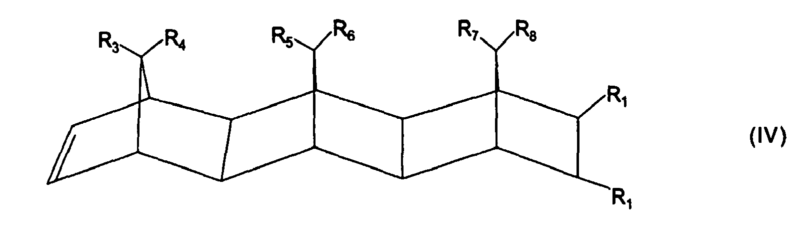 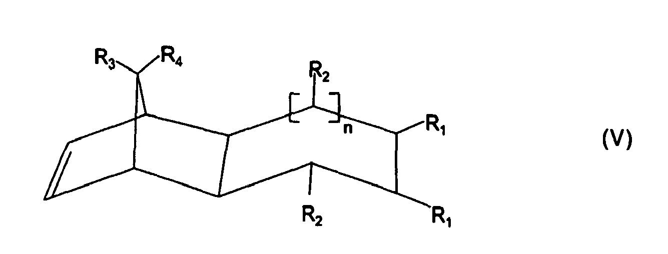 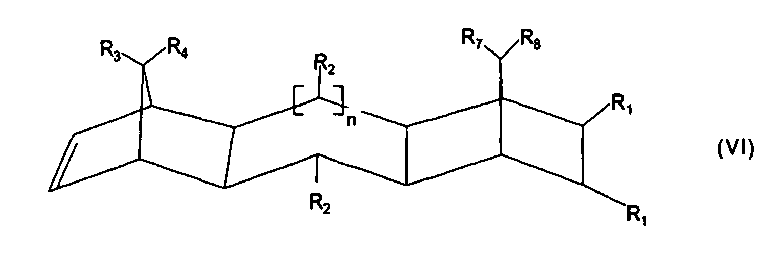 worin R¹, R², R³, R⁴, R⁵, R⁶, R⁷ und R⁸ gleich oder verschieden sind und ein Wasserstoffatom oder einen C₁-C₂₀-Kohlenwasserstoffrest, wie einen linearen oder verzweigten C₁-C₈-Alkylrest, C₆-C₁₈-Arylrest, C₇-C₂₀-Alkylenarylrest, einen cyclischen oder acyclischen C₂-C₂₀-Alkenylrest bedeuten, oder einen gesättigten, ungesättigten oder aromatischen Ring bilden, wobei gleiche Reste R¹ bis R⁸ in den verschiedenen Formeln I bis VI eine unterschiedliche Bedeutung haben können, worin n Werte von 0 bis 5 annehmen kann, und
0 bis 99,9 Gew.-%, vorzugsweise 0,1 bis 99,9 Gew.-%, bezogen auf die Gesamtmasse des Cycloolefincopolymers, polymerisierte Einheiten, welche sich ableiten von einem oder mehreren acyclischen Olefinen der Formel VII 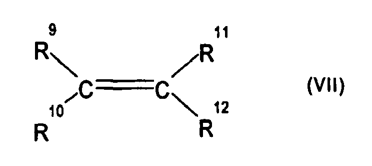 worin R⁹, R¹⁰, R¹¹ und R¹² gleich oder verschieden sind und ein Wasserstoffatom, einen linearen, verzweigten, gesättigten oder ungesättigten C₁-C₂₀₋Kohlenwasserstoffrest wie einen C₁-C₈-Alkylrest oder einen C₆-C₁₈-Arylrest bedeuten.

Außerdem können die verwendeten Cycloolefincopolymere 0 bis 45 Gew.-%, bezogen auf die Gesamtmasse des Cycloolefincopolymers, polymerisierte Einheiten enthalten, welche sich ableiten von einem oder mehreren monocyclischen Olefinen der Formel VIII 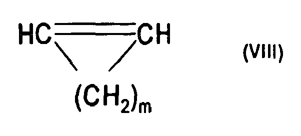 worin m eine Zahl von 2 bis 10 ist.

Bei den cyclischen Olefinen sind ebenfalls Derivate dieser cyclischen Olefine mit polaren Gruppen, wie Halogen-, Hydroxyl-, Ester-, Alkoxy-, Carboxy-, Cyano-, Amido-, Imido- oder Silylgruppen, eingeschlossen.

Bevorzugt im Sinne der Erfindung sind COCs, die polymerisierte Einheiten enthalten, welche sich ableiten von polycyclischen Olefinen der Formeln I oder III, und polymerisierte Einheiten, welche sich ableiten von acyclischen Olefinen der Formel VII, insbesondere Olefine mit Norbornengrundstruktur wie Norbornen und Tetracyclododecen und gegebenenfalls Vinylnorbornen oder Norbornadien.

Bevorzugt sind auch Cycloolefincopolymere mit polymerisierten Einheiten, abgeleitet von acyclischen Olefinen mit endständigen Doppelbindungen wie α-Olefine mit 2 bis 20 C-Atomen, insbesondere Ethylen oder Propylen, beispielsweise Ethylen/Norbornen- und Ethylen/Tetracyclododecen-Copolymere.

Als Terpolymere sind bevorzugt Ethylen/Norbornen/Vinylnorbonen-, Ethylen/Norbornen/Norbornadien-, Ethylen/Tetracyclododecen/Vinylnorbornen-, Ethylen/Tetracyclododecen/Vinyltetracyclododecen- oder Ethylen/Norbornen/Dicyclopentadien-Terpolymere.

Ganz besonders vorteilhaft ist als COC ein Copolymer aus Ethylen und Norbornen einsetzbar.

Der Anteil der polymerisierten Einheiten, die sich ableiten von einem Polyen, bevorzugt Vinylnorbornen oder Norbornadien, liegt im allgemeinen bei 0,1 bis 50,0 mol-%, vorzugsweise bei 0,1 bis 20,0 mol-%, der Anteil des acyclischen Monoolefins der Formel VII beträgt im allgemeinen 0 bis 99,9 mol-%, vorzugsweise 5,0 bis 80,0 mol-%, bezogen auf die Gesamtzusammensetzung des Cycloolefinpolymers. In den beschriebenen Terpolymeren liegt der Anteil des polycyclischen Monoolefins bei 0,1 bis 99,9 mol-%, vorzugsweise 3,0 bis 75,0 mol-%, bezogen auf die Gesamtzusammensetzung des COCs.

Die thermoformbare Folie kann transparent sein oder auch durch Zugabe von Polymeren, die mit dem COC keine homogene Mischung bilden oder Pigmenten, als opake Folie vorliegen, oder mit löslichen Farbstoffen als gefärbte Folie hergestellt werden.

Der Einsatz des COCs verbessert nicht nur die Siegelfähigkeit und den Schlupf der Folie, sondern erhöht auch die Farbhaftung auf der erfindungsgemäß hergestellten Verpackung bei ihrer Beschriftung oder Bedruckung.

Abmischungen der genannten Polymere mit typischen Kunststoffadditiven wie Antioxidantien, Metalldesaktivatoren, Lichtschutzmitteln, Weichmachern, Gleitmitteln, Verarbeitungshilfsmitteln, Antistatika, optischen Aufhellern, Biostabilisatoren, Brandschutzmittel, sowie Füll- und Verstärkungsmittel (siehe auch Gächter, Müller, Plastics Additive Handbook, 4^{th} edition, 1993, München, Hanser) sind ebenfalls geeignet.

Die Cycloolefincopolymere können in bekannter Weise hergestellt werden bei Temperaturen von -78 bis 200 °C und einem Druck von 0,01 bis 200 bar, in Gegenwart eines oder mehrerer Katalysatorsysteme, die mindestens eine Übergangsmetallverbindung und gegebenenfalls einen Cokatalysator und gegebenenfalls ein Trägermaterial enthalten. Als Übergangsmetallverbindungen eignen sich Metallocene, insbesondere stereorigide Metallocene. Beispiele für Katalysatorsysteme, die für die Herstellung der COCs geeignet sind, sind z.B. beschrieben in US-A-5,008,356, EP-A-0 407 870, EP-A-0 485 893 und EP-A-0 503 422, worauf Bezug genommen wird.

Die Herstellung der Cycloolefincopolymere kann auch auf anderen, nachfolgend kurz skizzierten Wegen erfolgen : Katalysatorsysteme, basierend auf Mischkatalysatoren aus Titansalzen und Aluminiumorganylen, werden in DD-A-109 224 und DD-A-237 070 beschrieben. EP-A-0 156 464 beschreibt die Herstellung mit Katalysatoren auf Vanadiumbasis.

Die Cycloolefincopolymere können auch durch ringöffnende Polymerisation mindestens eines der Monomere mit den Formeln I bis VI und anschließender Hydrierung der erhaltenen Produkte erhalten werden.

Die Polymerisation kann auch mehrstufig erfolgen, wobei auch Blockcopolymere entstehen können, siehe dazu DE-A-42 05 416.

Unter COC werden solche Polyolefine verstanden, die trotz einer regellosen Anordnung der Molekülketten bei Raumtemperatur Feststoffe sind. Die Wärmeformbeständigkeiten der Cycloolefincopolymere lassen sich in einem weiten Bereich einstellen. Als Anhaltspunkt für die Wärmeformbeständigkeit, wie sie nach ISO 75 Teil 1 und Teil 2 an Spritzgußformkörpern bestimmt werden kann, lässt sich für Cycloolefincopolymere die Glasübergangstemperatur T_{g} heranziehen, gemessen nach DIN EN ISO 11357-1 mit Hilfe einer DSC bei einer Aufheizgeschwindigkeit von 10 K/min. Die beschriebenen Cycloolefincopolymere weisen Glasübergangstemperaturen im Bereich von 65 bis 200 °C auf, vorzugsweise von 85 bis 200 °C, insbesondere von 120 bis 190 °C. Die erfindungsgemäße Folie kann auch ggf. Mischungen von verschiedenen COCs mit unterschiedlichen Glasübergangstemperaturen enthalten.

Die Dichte der Cycloolefincopolymere, die in der vorliegenden Erfindung eingesetzt werden, liegt üblicherweise im Bereich von 0,9 bis 1,1 g/cm³, vorzugsweise 0,9 bis 1,05 g/cm³.

Als Polyolefine, die neben dem COC in der Folie gemäß der Erfindung eingesetzt werden können, sind Polyethylene hoher oder niederer Dichte (HDPE, LDPE, LLDPE), Ethylen-Vinylacetat-Copolymer, lonomer, Polypropylen, Olefin-Copolymere, Plastomere oder Mischungen daraus geeignet.

Es gibt Ausführungsformen des erfindungsgemäßen Verfahrens, bei denen die thermoformbare Folie mit weiteren Folien zu einem Mehrschichtenverbund kombiniert wird. Der Verbund kann durch Laminieren von vorher einzeln für sich hergestellten Folien, durch Koextrusion oder durch Extrusionsbeschichtung bzw. Extrusionskaschierung hergestellt werden. Zusätzlich können zwischen den einzelnen Schichten weitere, die Haftung verbessernde Schichten vorgesehen sein. Die hierfür eingesetzten Substanzen können mindestens ein oder mehrere Polymere enthalten und sind als solche allgemein bekannt.

Besonders überraschend war, dass der bei dem Fertigungsprozeß der thermoformbaren Folie anfallende Folienverschnitt mit allen seinen Komponenten wieder als Regranulat eingesetzt und somit wiederverwertet werden kann, ohne die Thermoformbarkeit der Folie und die Wärmeformbarkeit der daraus hergestellten Verpackung negativ zu beeinträchtigen. Hierdurch lässt sich die Wirtschaftlichkeit des erfindungsgemäßen Verfahrens deutlich verbessern und eine Umweltbelastung reduzieren.

Die die Haftung verbessernde Schicht kann vorteilhaft in der Schmelze oder aber als Lösung, Suspension oder lösemittelhaltiger Klebstoff aufgebracht werden.

Thermoformbare Folien für das erfindungsgemäße Verfahren können beispielsweise hergestellt werden durch ein bekanntes Verfahren zur Herstellung einer Kunststoff-Mono- oder Mehrschichtfolien, bei welchem die Polymeren für die Folie und/oder die Polymermischungen in einem Extruder komprimiert, erwärmt und anschließend die Schmelze oder die Schmelzen durch eine Flachdüse extrudiert werden und die so erhaltene Folie auf einer oder mehreren Walzen oder auf Stahlbändern abgezogen wird. Gegebenenfalls zugesetzte Additive können bereits im Polymer bzw. in der Polymermischung enthalten sein oder sie werden via Masterbatch-Technik zugegeben.

Die Schmelze/n können auch durch eine Ringdüse extrudiert werden, wobei die so erhaltene Folie auf einer Blasfolienanlage zur Folie verarbeitet und über Walzen oder über Bänder flachgelegt wird.

Gegebenenfalls kann/können eine oder beide Oberfläche/n der Folie nach bekannten Methoden korona- oder flammbehandelt werden. Durch eine Behandlung der Oberfläche wird diese für eine nachfolgende Beschriftung oder Bedruckung nach allgemein bekannten Methoden vorbereitet.

Es war besonders überraschend, dass das erfindungsgemäße Verfahren beim Einsatz der thermoformbaren Folie, die vorstehend in allen Einzelheiten beschrieben ist, sich beim Thermoformen durch eine besonders gute Detailwiedergabe auszeichnet und dass sich vor allem die Wanddicke beim Thermoformen sehr gleichmäßig ausbildet. Weiter überraschend war, dass das Siegelverhalten von zwei derart hergestellten Folien zueinander sehr gut ist, d.h. es ließen sich bei niedriger Siegelanspringtemperatur dichte Siegelverbunde herstellen, die anschließend aber wieder per Hand zu lösen waren, bzw. ließen sich bei erhöhter Siegeltemperatur mechanisch unlösbare Verbindungen erzeugen. Ein weiterer Vorteil der thermoformbaren Folie ist ihr hervorragendes Stanzverhalten, was dadurch zum Ausdruck kommt, dass sie beim Ausstanzen keine scharfen Kanten oder Ecken ausbildet.

### Ausführungsbeispiele

In den nachfolgenden Beispielen wurden die folgenden Ausgangsmaterialien eingesetzt:
1. Ethylen-Norbornen Copolymer mit einer Glasübergangstemperatur (T_{g})von 80 °C und einer Viskositätszahl (VZ) von 80 ml/g (Handelsname ® Topas 8007, Ticona GmbH, Frankfurt a. M.).
2. Ethylen-Norbornen Copolymer mit einer T_{g} von 140 °C und einer VZ von 60 ml/g (Handelsname ® Topas 6013, Ticona GmbH, Frankfurt a. M).
3. Polyethylen (Handelsname ® Lupolex 18QFA, Basell GmbH)
4. Polyethylen (Handelsname ® Luflexen 18PFAX, Basell GmbH)
5. Polypropylen (Handelsname HB600TF, Borealis)

Aus den genannten Materialen wurden gemäß den in Tabelle 1 angeführten Beispielen Folien durch Extrusion hergestellt und um 100% bei den angegebenen Temperaturen gestreckt. Anschließend wurde die Längenänderung dieser gestreckten Folien als Funktion der Temperatur über 20 min bestimmt. Der Wert für den Schrumpf ergibt sich aus der Differenz der Länge vor und nach der Wärmelagerung geteilt durch die Ausgangslänge. Der Schrumpf ist ein Maß für die Wärmeformstabilität der thermogeformten Folien wie z.B. tiefgezogene Blisterverpackungen.

**Tabelle 1**

| **Beispiel** | **COC** | **Polyolefin** | **Strecktemperatur [°C]** | **Schrumpftemperatur* [°C]** | Wasserdampfdurchlässigkeit [g/m²·d] |
|---|---|---|---|---|---|
| **1a** | **100% 8007** | **-** | **90** | **80** | **1** |
| **1b** | **80% 8007** | **20% 18QFA** | **90** | **75** | **1,2** |
| **1c** | **60% 8007** | **40% 18QPA** | **90** | **70** | **1,5** |
| **1d** | **20% 8007** | **80% 18QFA** | **90** | **30** | **3,8** |
| **2a** | **100% 6013** | **-** | **150** | **142** | **1,3** |
| **2b** | **80% 6013** | **20% 18PFAX** | **150** | **144** | **1,5** |
| **2c** | **60% 6013** | **40% 18PFAX** | **150** | **141** | **1,8** |
| **2d** | **40% 6013** | **60% 18PFAX** | **150** | **144** | **2,9** |
| **2e** | **20% 6013** | **80% 18PFAX** | **150** | **143** | **4,2** |
| **V1** | **-** | **100% 18QFA** | **90** | **< 30** | **4,8** |
| **V2** | **-** | **100% 18PFAX** | **150** | **80** | **4,7** |
| **V3** | **-** | **100% PP** | **70** | **65** | **2,5** |

| | | | | | |
|---|---|---|---|---|---|
| *Als Schrumpftemperatur wird diejenige Temperatur angegeben, bei der der Schrumpf nach 20 min genau 5 % beträgt. ** Die Messung der Wasserdampfdurchlässigkeit erfolgte nach ASTM F 372 bei einer Temperatur von 38 °C und einer relativen Luftfeuchtigkeit von 90 % normiert auf eine Folie von 100 µm. | | | | | |

Die Werte in Tabelle 1 zeigen deutlich die Erhöhung der Temperaturstabilität aller Polyolefinfolien durch Blenden mit COC. Z.B. können tiefgezogene Blister aus Folien, die COC mit einer T_{g} von 140 °C enthalten, mit Wasserdampf bei einer Temperatur von 121 °C sterilisiert werden, ohne dass ein Rückschrumpf oder eine Formänderung eintritt.

## Patentansprüche

1. Verfahren zum Herstellen einer Verpackung aus einer thermoformbaren Folie aus thermoplastischen Polyolefinen durch Thermoformen, die nach dem Thermoformen eine verbesserte Wärmeformbeständigkeit und eine hohe Wasserdampfbarriere besitzt, **dadurch gekennzeichnet, dass** die thermoformbare Folie eine Menge im Bereich von 5 bis 100 Gew.-% Cycloolefincopolymer, bezogen auf das Gesamtgewicht an Polyolefinen, mit einer Glastemperatur T_{g} im Bereich von 65 bis 200 °C, gemessen nach DIN EN ISO 11357-1 mit Hilfe einer DSC bei einer Aufheizgeschwindigkeit von 10 K/min, enthält und dass die daraus durch Thermoformen bei einer Temperatur im Bereich von 70 bis 170 °C hergestellte Verpackung eine Wärmeformbeständigkeit im Bereich von 60 bis 200 °C besitzt.

2. Verfahren nach Anspruch 1, **dadurch gekennzeichnet, dass** die Verpackung durch Thermoformen bei einer Temperatur im Bereich von 80 bis 160 °C hergestellt wird.

3. Verfahren nach Anspruch 1, **dadurch gekennzeichnet, dass** das Cycloolefincopolymer eine mittlere Molmasse, ausgedrückt als M_{w}, im Bereich von 500 bis 2000000 g/mol besitzt.

4. Verfahren nach Anspruch 3, **dadurch gekennzeichnet, dass** die mittlere Molmasse im Bereich von 1000 bis 1000000 g/mol liegt.

5. Verfahren nach Anspruch 4, **dadurch gekennzeichnet, dass** die mittlere Molmasse im Bereich von 3000 bis 500000 g/mol liegt.

6. Verfahren nach einem oder mehreren der Ansprüche 1 bis 5, **dadurch gekennzeichnet, dass** das Cycloolefincopolymere eine Viskositätszahl gemäß DIN 53 728 im Bereich von 5 bis 5 000 ml/g besitzt.

7. Verfahren nach Anspruch 6, **dadurch gekennzeichnet, dass** die Viskositätszahl im Bereich von 5 bis 2000 ml/g liegt.

8. Verfahren nach Anspruch 7, **dadurch gekennzeichnet, dass** die Viskositätszahl im Bereich von 5 bis 1000 ml/g liegt.

9. Verfahren nach einem oder nach mehreren der Ansprüche 1 bis 8, **dadurch gekennzeichnet, dass** die thermoformbare Folie eine Monofolie oder eine Mehrschichtfolie ist und eine Gesamtdicke im Bereich von 5 bis 2000 µm aufweist.

10. Verfahren nach Anspruch 9, **dadurch gekennzeichnet, dass** die Gesamtdicke der Folie im Bereich von 50 bis 500 µm liegt.

11. Verfahren nach Anspruch 10, **dadurch gekennzeichnet, dass** die Gesamtdicke der Folie im Bereich von 200 bis 400 µm liegt.

12. Verfahren nach einem oder nach mehreren der Ansprüche 1 bis 11, **dadurch gekennzeichnet, dass** das Cycloolefincopolymere 0,1 Gew.-% bis 100,0 Gew.-%, bezogen auf die Gesamtmasse des Cycloolefincopolymeren, polymerisierte Einheiten enthält, welche sich ableiten von mindestens einem polycyclischen Olefin der Formeln I, II, II', III, IV, V oder VI 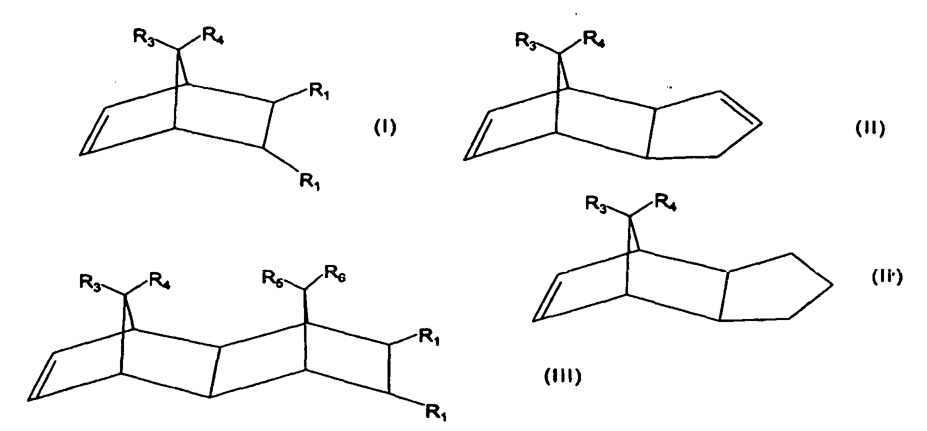 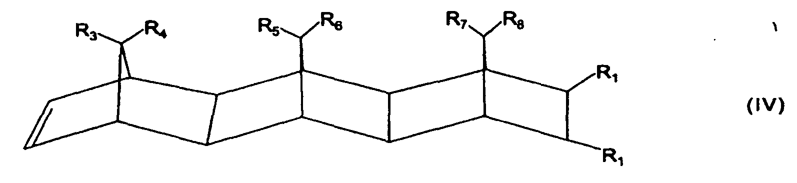 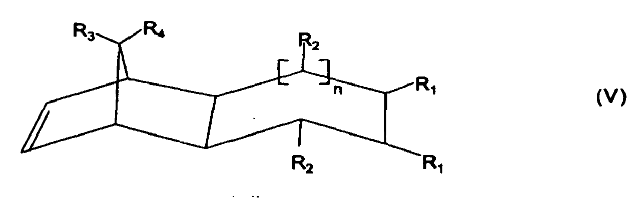 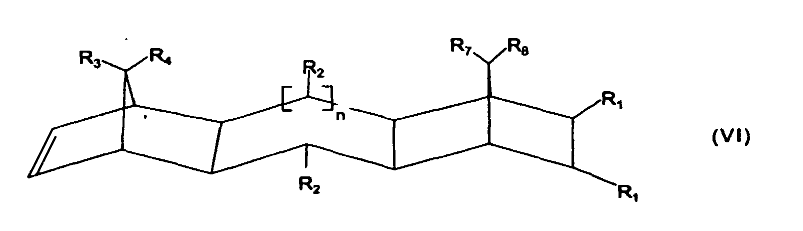 worin R¹, R², R³, R⁴, R⁵, R⁶, R⁷ und R⁸ gleich oder verschieden sind und ein Wasserstoffatom oder einen C₁-C₂₀-Kohlenwasserstoffrest bedeuten oder einen gesättigten, ungesättigten oder aromatischen Ring bilden, wobei gleiche Reste R¹ bis R⁸ in den verschiedenen Formeln I bis VI eine unterschiedliche Bedeutung haben können, worin n Werte von 0 bis 5 darstellt, und
0 bis 99,9 Gew.-%, bezogen auf die Gesamtmasse des Cycloolefincopolymers, polymerisierte Einheiten, welche sich ableiten von einem oder mehreren acyclischen Olefinen der Formel VII 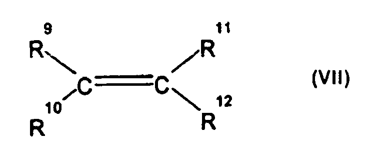 worin R⁹, R¹⁰, R¹¹ und R¹² gleich oder verschieden sind und ein Wasserstoffatom, einen linearen, verzweigten, gesättigten oder ungesättigten C₁-C₂₀-Kohlenwasserstoffrest bedeuten.

13. Verfahren nach Anspruch 12, **dadurch gekennzeichnet, dass** das Cycloolefincopolymere 0,1 Gew.-% bis 99,9 Gew.-% polymerisierte Einheiten enthält, welche sich ableiten von mindestens einem polycyclischen Olefin der Formeln I, II, II', III, IV, V oder VI, sowie 0,1 bis 99,9 Gew.-% polymerisierte Einheiten, welche sich ableiten von einem oder mehreren acyclischen Olefinen der Formel VII.

14. Verfahren nach Anspruch 13, **dadurch gekennzeichnet, dass** R¹, R², R³, R⁴, R⁵, R⁶, R⁷ und R⁸ gleich oder verschieden sind und ein Wasserstoffatom oder einen linearen oder verzweigten C₁-C₈-Alkylrest, C₆-C₁₈-Arylrest, C₇-C₂₀Alkylenarylrest oder einen cyclischen oder acyclischen C₂-C₂₀-Alkenylrest bedeuten und dass R⁹, R¹⁰, R¹¹ und R¹² gleich oder verschieden sind und ein Wasserstoffatom oder einen C₁-C₈-Alkylrest oder einen C₆-C₁₈-Arylrest bedeuten.

15. Verfahren nach einem oder mehreren der Ansprüche 12 bis 14, **dadurch gekennzeichnet, dass** das Cycloolefincopolymere eine Menge von 0 bis 45 Gew.%, bezogen auf seine Gesamtmasse, polymerisierte Einheiten enthält, die sich von einem oder mehreren monoolefinischen Olefinen der Formel VIII 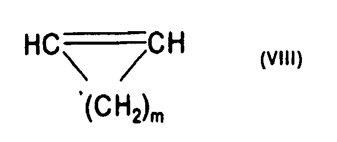 ableiten, worin m eine Zahl von 2 bis 10 ist.

16. Verfahren nach einem oder nach mehreren der Ansprüche 1 bis 15, **dadurch gekennzeichnet, dass** das Cycloolefincopolymere eine Glastemperatur T_{g} im Bereich von 85 bis 200 °C hat, und dass sie gegebenenfalls Mischungen von Cycloolefincopolymeren mit unterschiedlicher T_{g} enthält.

17. Verfahren nach Anspruch 16, **dadurch gekennzeichnet, dass** das Cycloolefincopolymere eine Glastemperatur T_{g} im Bereich von 120 bis 190 °C hat.

18. Verfahren nach einem oder nach mehreren der Ansprüche 1 bis 17, **dadurch gekennzeichnet, dass** die thermoformbare Folie als weitere Polyolefine Polyethylene hoher oder niederer Dichte (HDPE, LDPE, LLDPE), Ethylen-Vinylacetat-Copolymer, lonomer, Polypropylen, Olefin-Copolymere, Plastomere oder Mischungen daraus enthält.

19. Verfahren nach einem oder nach mehreren der Ansprüche 1 bis 18, **dadurch gekennzeichnet, dass** die thermoformbare Folie bis zu 40 Gew.-% aus bei der Herstellung anfallendem Folienverschnitt in Form von Regranulat enthält.

20. Verpackung, hergestellt nach einem Verfahren nach einem oder nach mehreren der Ansprüche 1 bis 19, **dadurch gekennzeichnet dass** sie nach dem Thermoformen der thermoformbaren Folie eine Wärmeformbeständigkeit im Bereich von 60 bis 200 °C besitzt.

21. Verpackung nach Anspruch 20, **dadurch gekennzeichnet, dass** die eine Wärmeformbeständigkeit im Bereich von 80 bis 200 °C besitzt.

22. Verpackung nach Anspruch 21, **dadurch gekennzeichnet, dass** die eine Wärmeformbeständigkeit im Bereich von 100 bis 180 °C besitzt.

23. Verpackung nach einem oder mehreren der Ansprüche 20 bis 22, **dadurch gekennzeichnet, dass** sie eine Blisterverpackung ist.

## Claims

1. A process for production of a packaging composed of a thermoformable foil composed of thermoplastic polyolefins via thermoforming, where the material has, after thermoforming, an improved heat-distortion resistance value, and a high water-vapor barrier, which comprises the presence, within the thermoformable foil, of an amount in the range from 5 to 100% by weight of cycloolefin copolymer, based on the total weight of polyolefins, with a glass transition temperature T_{g} in the range from 65 to 200°C, measured to DIN EN ISO 11357-1 with the aid of a DSC with a heating rate of 10 K/min, and producing therefrom, via thermoforming at a temperature in the range from 70 to 170°C, a packaging having a heat-distortion resistance value in the range from 60 to 200°C.

2. The process as claimed in claim 1, wherein the packaging is produced via thermoforming at a temperature in the range from 80 to 160°C.

3. The process as claimed in claim 1, wherein the average molar mass of the cycloolefin copolymer, expressed as M_{w}, is in the range from 500 to 2 000 000 g/mol.

4. The process as claimed in claim 3, wherein the average molar mass is in the range from 1000 to 1 000 000 g/mol.

5. The process as claimed in claim 4, wherein the average molar mass is in the range from 3000 to 500 000 g/mol.

6. The process as claimed in one or more of claims 1 to 5, wherein the viscosity number to DIN 53 728 of the cycloolefin copolymer is in the range from 5 to 5000 ml/g.

7. The process as claimed in claim 6, wherein the viscosity number is in the range from 5 to 2000 ml/g.

8. The process as claimed in claim 7, wherein the viscosity number is in the range from 5 to 1000 ml/g.

9. The process as claimed in one or more of claims 1 to 8, wherein the thermoformable foil is a monofoil or a multilayer foil and its total thickness is in the range from 5 to 2000 µm.

10. The process as claimed in claim 9, wherein the total thickness of the foil is in the range from 50 to 500 µm.

11. The process as claimed in claim 10, wherein the total thickness of the foil is in the range from 200 to 400 µm.

12. The process as claimed in one or more of claims 1 to 11, wherein the cycloolefin copolymer contains, based on the total weight of the cycloolefin copolymer, from 0.1% by weight to 100.0% by weight of polymerized units which derive from at least one polycyclic olefin of the formulae I, II, II', III, IV, V, or VI 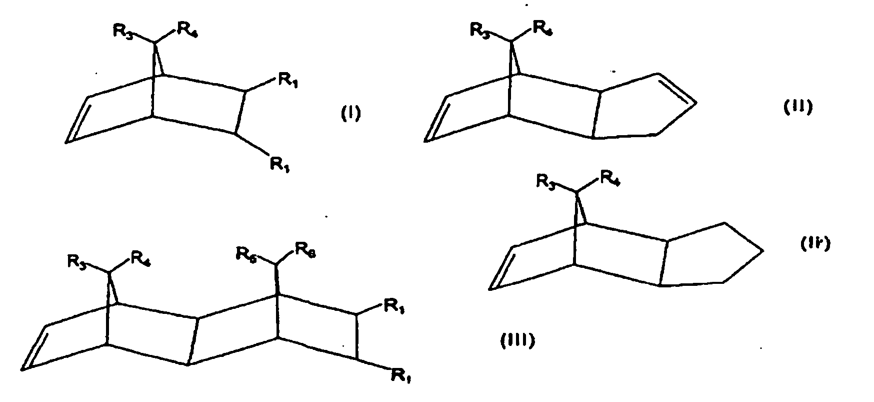 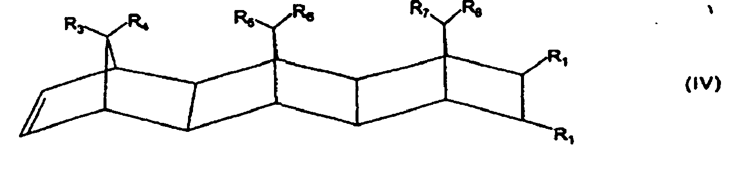 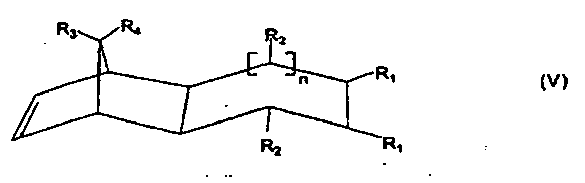 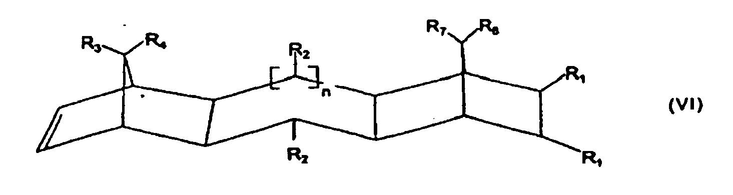 where R¹, R², R³, R⁴, R⁵, R⁶, R⁷, and R⁸ are identical or different, and are a hydrogen atom or a C₁-C₂₀ hydrocarbon radical, or form a saturated, unsaturated, or aromatic ring, where the same radicals R¹ to R⁸ in the various formulae I to VI can have a different meaning, where n is from 0 to 5, and
from 0 to 99.9% by weight, based on the total weight of the cycloolefin copolymer, of polymerized units which derive from one or more acyclic olefins of the formula VII 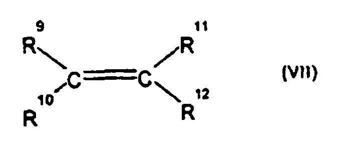 where R⁹, R¹⁰, R¹¹, and R¹² are identical or different and are a hydrogen atom, a linear, branched, saturated, or unsaturated C₁-C₂₀ hydrocarbon radical.

13. The process as claimed in claim 12, wherein the cycloolefin copolymer contains from 0.1% by weight to 99.9% by weight of polymerized units which derive from at least one polycyclic olefin of the formulae I, II, II', III, IV, V, or VI, and also from 0.1 to 99.9% by weight of polymerized units which derive from one or more acyclic olefins of the formula VII.

14. The process as claimed in claim 13, wherein R¹, R², R³, R⁴, R⁵, R⁶, R⁷, and R⁸ are identical or different and are a hydrogen atom or a linear or branched C₁-C₈-alkyl radical, C₆-C₁₈-aryl radical, C₇-C₂₀-alkylenearyl radical, or a cyclic or acyclic C₂-C₂₀-alkenyl radical, and wherein R⁹, R¹⁰, R¹¹, and R¹² are identical or different and are a hydrogen atom or a C₁-C₈-alkyl radical or a C₆-C₁₈-aryl radical.

15. The process as claimed in one or more of claims 12 to 14, wherein the cycloolefin copolymer contains an amount of from 0 to 45% by weight, based on its total weight, of polymerized units which derive from one or more monoolefinic olefins of the formula VIII 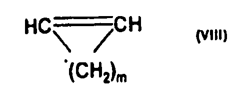 where m is a number from 2 to 10.

16. The process as claimed in one or more of claims 1 to 15, wherein the glass transition temperature T_{g} of the cycloolefin copolymer is in the range from 85 to 200°C, and wherein the material comprises, if appropriate, the mixture of cycloolefin copolymers with different T_{g}.

17. The process as claimed in claim 16, wherein the glass transition temperature T_{g} of the cycloolefin copolymer is in the range from 120 to 190°C.

18. The process as claimed in one or more of claims 1 to 17, wherein the thermoformable foil comprises, as other polyolefins, high- or low-density polyethylenes (HDPE, LDPE, LLDPE), ethylene-vinyl acetate copolymer, ionomer, polypropylene, olefin copolymers, plastomers, or a mixture thereof.

19. The process as claimed in one or more of claims 1 to 18, wherein the thermoformable foil comprises, in the form of regrind, up to 40% by weight of cut foil arising during the production process.

20. A packaging, produced by a process as claimed in one or more of claims 1 to 19, which, after thermoforming of the thermoformable foil, has a heat-distortion resistance value in the range from 60 to 200°C.

21. The packaging as claimed in claim 20, which has a heat-distortion resistance value in the range from 80 to 200°C.

22. The packaging as claimed in claim 21, which has a heat-distortion resistance value in the range from 100 to 180°C.

23. The packaging as claimed in one or more of claims 20 to 22, which is a blister pack.

## Revendications

1. Procédé de fabrication d'un emballage en une feuille thermoformable constituée de polyoléfines thermoplastiques par thermoformage, qui après le thermoformage présente une meilleure stabilité dimensionnelle à chaud et une forte barrière à la vapeur d'eau, **caractérisé en ce que** la feuille thermoformable contient une quantité comprise dans la plage de 5 à 100 % en poids d'un copolymère cyclooléfinique, par rapport au poids total des polyoléfines, ayant une température de transition vitreuse T_{g} comprise dans la plage de 65 à 200°C, mesurée selon DIN EN ISO 11357-1 à l'aide d'une ACD pour une vitesse de montée en température de 10 K/min, et **en ce que** l'emballage fabriqué à partir d'elle par thermoformage à une température comprise dans la plage de 70 à 170°C possède une stabilité dimensionnelle à chaud comprise dans la plage de 60 à 200°C.

2. Procédé selon la revendication 1, **caractérisé en ce que** l'emballage est fabriqué par thermoformage à une température comprise dans la plage de 80 à 160°C.

3. Procédé selon la revendication 1, **caractérisé en ce que** le copolymère cyclooléfinique présente une masse moléculaire moyenne, exprimée par M_{w}, comprise dans la plage de 500 à 2 000 000 g/mole.

4. Procédé selon la revendication 3, **caractérisé en ce que** la masse moléculaire moyenne est comprise dans la plage de 1000 à 1 000 000 g/mole.

5. Procédé selon la revendication 4, **caractérisé en ce que** la masse moléculaire moyenne est comprise dans la plage de 3000 à 500 000 g/mole.

6. Procédé selon l'une ou plusieurs des revendications 1 à 5, **caractérisé en ce que** le copolymère cyclooléfinique présente un indice de viscosité selon DIN 53 728 compris dans la plage de 5 à 5000 ml/g.

7. Procédé selon la revendication 6, **caractérisé en ce que** l'indice de viscosité est compris dans la plage de 5 à 2000 ml/g.

8. Procédé selon la revendication 7, **caractérisé en ce que** l'indice de viscosité est compris dans la plage de 5 à 1000 ml/g.

9. Procédé selon l'une ou plusieurs des revendications 1 à 8, **caractérisé en ce que** la feuille thermoformable est une feuille monocouche ou une feuille multicouche et présente une épaisseur totale comprise dans la plage de 5 à 2000 µm.

10. Procédé selon la revendication 9, **caractérisé en ce que** l'épaisseur totale de la feuille est comprise dans la plage de 50 à 500 µm.

11. Procédé selon la revendication 10, **caractérisé en ce que** l'épaisseur totale de la feuille est comprise dans la plage de 200 à 400 µm.

12. Procédé selon l'une ou plusieurs des revendications 1 à 11, **caractérisé en ce que** le copolymère cyclooléfinique contient de 0,1 % en poids à 100,0 % en poids, par rapport au poids total du copolymère cyclooléfinique, d'unités polymérisées qui dérivent d'au moins une oléfine polycyclique ayant les formules I, II, II', III, IV, V ou VI 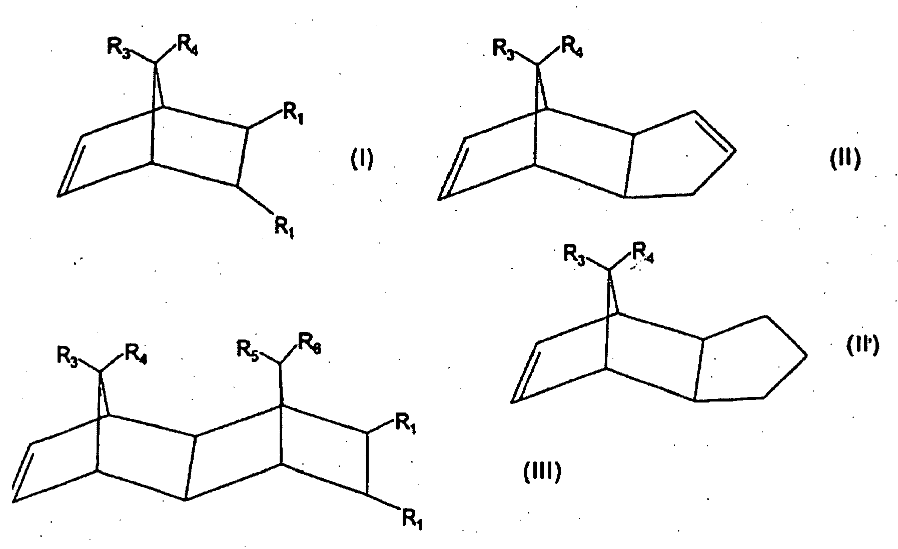 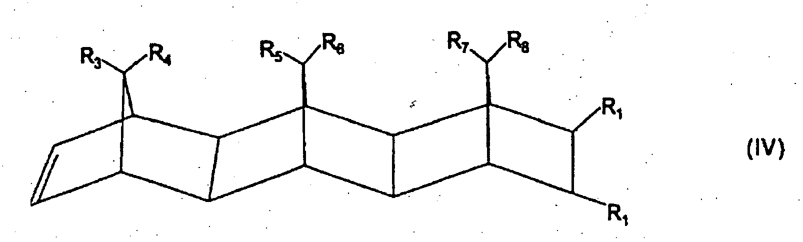 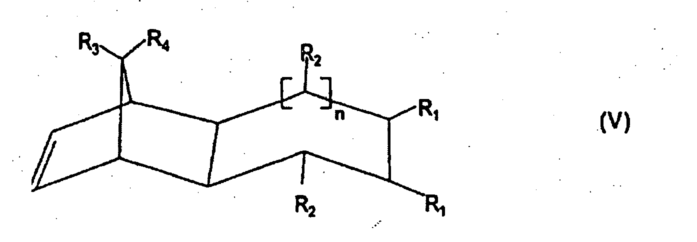 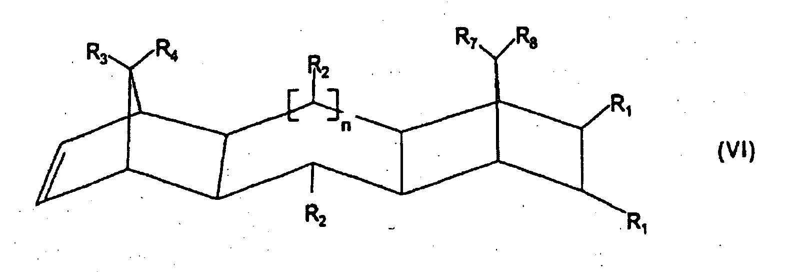 dans lesquelles R¹, R², R³, R⁴, R⁵, R⁶, R⁷ et R⁸ sont identiques ou différents et représentent chacun un atome d'hydrogène ou un radical hydrocarboné en C₁-C₂₀, ou forment un noyau saturé, insaturé ou aromatique, des radicaux identiques R¹ à R⁸ pouvant dans les différentes formules I à VI avoir des significations différentes, n valant 0 à 5, et
0 à 99,9 % en poids, par rapport au poids total du copolymère cyclooléfinique, d'unités polymérisées qui dérivent d'une ou plusieurs oléfines acycliques de formule VII 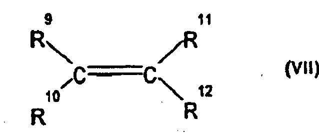 dans laquelle R⁹, R¹⁰, R¹¹ et R¹² sont identiques ou différents et représentent chacun un atome d'hydrogène, un radical hydrocarboné en C₁-C₂₀ à chaîne droite ou ramifiée, saturé ou insaturé.

13. Procédé selon la revendication 12, **caractérisé en ce que** le copolymère cyclooléfinique contient 0,1 % en poids à 99,9 % en poids d'unités polymérisées qui dérivent d'au moins une oléfine polycyclique ayant les formules I, II, II', III, IV, V ou VI, ainsi que 0,1 à 99,9 % en poids d'unités polymérisées qui dérivent d'une ou plusieurs oléfines acycliques de formule VII.

14. Procédé selon la revendication 13, **caractérisé en ce que** R¹, R², R³, R⁴, R⁵, R⁶, R⁷ et R⁸ sont identiques ou différents et représentent chacun un atome d'hydrogène ou un radical alkyle en C₁-C₈ à chaîne droite ou ramifiée, un radical aryle en C₆-C₁₈, un radical alcénylaryle en C₇₋C₂₀ ou un radical alcényle en C₂-C₂₀ cyclique ou acyclique, et **en ce que** R⁹, R¹⁰, R¹¹ et R¹² sont identiques ou différents et représentent chacun un atome d'hydrogène ou un radical alkyle en C₁-C₈ ou un radical aryle en C₆-C₁₈.

15. Procédé selon l'une ou plusieurs des revendications 12 à 14, **caractérisé en ce que** le copolymère cyclooléfinique contient une quantité de 0 à 45 % en poids, par rapport à son poids total, d'unités polymérisées qui dérivent d'une ou plusieurs oléfines monooléfiniques de formule VIII 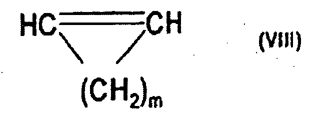 m étant un nombre de 2 à 10.

16. Procédé selon l'une ou plusieurs des revendications 1 à 5, **caractérisé en ce que** le copolymère cyclooléfinique a une température de transition vitreuse T_{g} comprise dans la plage de 85 à 200°C, et qu'il contient éventuellement des mélanges de copolymères cyclooléfiniques ayant différentes T_{g}.

17. Procédé selon la revendication 16, **caractérisé en ce que** le copolymère cyclooléfinique a une température de transition vitreuse T_{g} comprise dans la plage de 120 à 190°C.

18. Procédé selon l'une ou plusieurs des revendications 1 à 17, **caractérisé en ce que** la feuille thermoformable contient, en tant qu'autres polyoléfines, des polyéthylènes haute densité ou basse densité (PEHD, PEBD, PEBDL), un copolymère éthylène-acétate de vinyle, un ionomère, du polypropylène, un copolymère d'oléfine, un plastomère ou des mélanges de ces derniers.

19. Procédé selon l'une ou plusieurs des revendications 1 à 18, **caractérisé en ce que** la feuille thermoformable contient jusqu'à 40 % en poids de découpes de feuille, obtenues lors de la fabrication et sous forme d'un regranulat.

20. Emballage fabriqué par un procédé selon l'une ou plusieurs des revendications 1 à 19, **caractérisé en ce que**, après le thermoformage de la feuille thermoformée, il présente une stabilité dimensionnelle à chaud comprise dans la plage de 60 à 200°C.

21. Emballage selon la revendication 20, **caractérisé en ce qu'**il présente une stabilité dimensionnelle à chaud comprise dans la plage de 80 à 200°C.

22. Emballage selon la revendication 21, **caractérisé en ce qu'**il présente une stabilité dimensionnelle à chaud comprise dans la plage de 100 à 180°C.

23. Emballage selon l'une ou plusieurs des revendications 20 à 22, **caractérisé en ce qu'**il s'agit d'un emballage à alvéoles thermoformées de type blister.
